# EUROPÄISCHE PATENTSCHRIFT

(11) **EP 1 087 155 B1**
(45) Veröffentlichungstag und Bekanntmachung des Hinweises auf die Patenterteilung: **11.08.2004**
(21) Anmeldenummer: 00120499.9
(22) Anmeldetag: 20.09.2000
(51) Int. Cl.: F16H 59/02

(54) **Vorrichtung zur Steuerung einer Getriebebaueinheit**
Device for controlling a transmission unit
Dispositif de commande pour une boîte de vitesses

(30) Priorität: 22.09.1999 DE 19945352
(43) Veröffentlichungstag der Anmeldung: 28.03.2001
(73) Patentinhaber: Voith Turbo GmbH & Co. KG, 89522 Heidenheim (DE)
(72) Erfinder: Dietzel, Bernd, 89428 Syrgenstein (DE); Bürk, Richard, 88454 Hochdorf (DE)
(74) Vertreter: Dr. Weitzel & Partner

(56) Entgegenhaltungen:
- DE-A- 19 736 931
- DE-A- 19 810 479
- US-A- 4 910 494
- PATENT ABSTRACTS OF JAPAN vol. 1999, no. 10, 31. August 1999 (1999-08-31) -& JP 11 141664 A (HITACHI LTD), 25. Mai 1999 (1999-05-25)

## Beschreibung

Die Erfindung betrifft eine Vorrichtung zur Steuerung einer Getriebebaueinheit, insbesondere zur elektronischen Steuerung, im einzelnen mit den Merkmalen aus dem Oberbegriff des Anspruches 1.

Elektronische Getriebesteuersysteme sind in einer Vielzahl von Ausführungen aus dem Stand der Technik bekannt. Diese umfassen in der Regel eine, der Getriebebaueinheit zugeordnete Steuereinrichtung, welche die zur Ansteuerung des Getriebes, insbesondere der Stellglieder für die Schaltelemente und/oder der hydrodynamischen Bauelemente erforderlichen Signale aufnimmt, verarbeitet und die entsprechenden Stellgrößen zur Ansteuerung der Stellglieder erzeugt. Als Eingangsgrößen fungieren dabei wenigstens die mittels einer Vorwahleinrichtung zur Vorgabe eines Fahrerwunsches für mindestens einen der Fahrzustände "Leerlauf", "Vorwärtsfahrt" oder "Rückwärtsfahrt" zur Ansteuerung der Getriebebaueinheit generierten Signale. Die Vorwahleinrichtungen zur Vorgabe eines Fahrerwunsches nach einem bestimmten einzustellenden Fahrzustand, welcher durch entsprechende Ansteuerung einer Getriebebaueinheit, insbesondere der einzelnen Schaltelemente und/oder der hydrodynamischen Leistungsübertragungs- oder Wandlungseinrichtungen einer Getriebebaueinheit, eingestellt werden kann, sind ebenfalls in verschiedenen Ausführungen vorbekannt. Für den Einsatz in Nutzfahrzeugen, insbesondere Bussen, finden dabei vor allem Tastschaltereinrichtungen Verwendung. Allen bekannten Vorwahleinrichtungen gemeinsam ist jedoch, daß diese Betätigungselemente aufweisen, mittels welchen der entsprechend gewünschte Fahrzustand vorgewählt und über die wenigstens mittelbar das entsprechende Signal für die Steuereinrichtung der Getriebebaueinheit generiert werden kann. Im einzelnen werden dabei wenigstens die nachfolgend genannten drei Fahrzustände unterschieden:
a) "Leerlauf", welcher einer, mit dem Betätigungselement einstellbaren Neutralstellung entspricht;
b) "Rückwärtsfahrt"
c) "Vorwärtsfahrt"

Für die Fahrzustände "Vorwärtsfahrt" und "Rückwärtsfahrt" kann dabei zusätzlich unter Ausnutzung einer bestimmten Anzahl von theoretisch möglichen Gangstufen der Getriebebaueinheit, insbesondere eines automatischen Getriebes, ein bestimmter vordefinierbarer Übersetzungsbereich aus einem theoretisch möglichen Gesamtübersetzungsbereich überstrichen werden. Dies erfolgt durch Untergliederung der Fahrzustände in verschiedene Unterfahrzustände, wobei für diese ebenfalls entsprechende Betätigungselemente zur Auswahl vorgesehen sind. Diese Unterfahrzustände zeichnen sich dadurch aus, daß im Fahrzustand "Vorwärtsfahrt" und/oder "Rückwärtsfahrt" tatsächlich nur ein bestimmter Bereich des theoretisch möglichen zur Verfügung stehenden Übersetzungsbereiches der Getriebebaueinheit durch einen Teil der theoretisch möglichen Gangstufen überstrichen wird. Weist beispielsweise die automatische Getriebebaueinheit sechs Gänge auf, besteht dann die Möglichkeit vom Fahrer vorzugeben, ob im Fahrzustand "Vorwärtsfahrt" alle sechs Gänge genutzt werden sollen, oder ob lediglich eine bestimmte Anzahl der unteren Gänge durchlaufen werden soll.

Die Ansteuerung der Getriebebaueinheit, insbesondere einzelner Komponenten zur Optimierung des Übertragungsverhaltens oder anderer Aufgaben kann zusätzlich in Abhängigkeit einer Reihe weiterer Eingangsgrößen erfolgen. Insbesondere zur Realisierung eines entsprechenden Motor-Getriebemanagements beim Einsatz in Fahrzeugen ist es erforderlich, zusätzliche, die Funktionsweise einzelner Komponenten im Antriebsstrang wenigstens mittelbar beschreibende Größen zur Ansteuerung der Getriebebaueinheit zu berücksichtigen. Diese Größen und die daraus generierten Signale können beispielsweise über eine übergeordnete Fahrzeugsteuerung erzeugt und der Getriebesteuerung zugeführt werden. Denkbar ist es auch, entsprechende Eingangsgrößen direkt der Getriebesteuereinrichtung der Getriebebaueinheit zuzuführen, das heißt, die Eingänge der Getriebesteuereinrichtung direkt mit den entsprechenden Erfassungseinrichtungen, welche beispielsweise als Sensoren ausgeführt sind, zu koppeln. Als Erfassungseinrichtungen fungieren dabei beispielsweise Sensoren zur Erfassung einer Ausgangsdrehzahl der Getriebeausgangswelle, einer Drehzahl der Motorabtriebswelle, ein Drucksensor zur wenigstens mittelbaren Erfassung des Füllungsgrades eines hydrodynamischen Retarders etc. Die elektronische Getriebesteuereinrichtung weist daher eine Vielzahl von Eingängen und Ausgängen, welche mit der entsprechenden Aktuatorik und Sensorik zur Realisierung der einzelnen Fahrzustände gekoppelt sind, auf. Da bereits allein durch die Vorwahleinrichtung zur Vorgabe eines Fahrerwunsches für einen bestimmten Fahrzustand eine Vielzahl von elektrischen Verbindungen zur elektronischen Getriebesteuerung erforderlich sind und die elektronische Getriebesteuereinrichtung nicht zwangsläufig im Bereich der Getriebebaueinheit angeordnet ist, sind in der Regel eine Vielzahl langer Verbindungsleitungen zwischen der Getriebebaueinheit und der elektronischen Getriebesteuereinrichtung vorzusehen. Dies bedeutet auch eine Vielzahl von Durchführungen am Getriebegehäuse und einer Vielzahl von Steckverbindungen zur Realisierung einer elektrischen Verbindung. Aufgrund der hohen Anzahl erforderlicher Leitungen und Steckverbindungen wird das gesamte System störanfälliger, was zu einer geringeren Verfügbarkeit und Zuverlässigkeit des Gesamtsystems führt. Besonders problematisch ist eine derartige Ausführung im Fall der Anordnung einer elektronischen Getriebesteuereinrichtung in Gelenkzügen im vorderen Fahrzeugbereich und der Getriebebaueinheit im hinteren Fahrzeugbereich. In Analogie gilt diese Aussage auch für die Kopplung der Getriebesteuereinrichtung mit der übrigen Fahrzeugelektronik. Die durch die Anordnung bedingten baulichen Gegebenheiten müssen dabei bei der Kabelführung mit berücksichtigt werden. Zusätzlich kann es erforderlich werden, in bestimmten Bereichen entsprechende Abschirmeinrichtungen vorzusehen, was ebenfalls die Ausstattung mit der gesamten Fahrzeugelektronik erheblich verteuert.

Aus der Druckschrift DE-A 198 10 479 ist ein Automatgetriebe für Kraftfahrzeuge bekannt, welchem ein elektronisches Getriebesteuergerät zugeordnet ist. Ferner ist ein elektrisches Fahrstufenwählelement vorgesehen, welches in räumlicher Entfernung zum Getriebesteuergerät angeordnet ist und beispielsweise über einen Can-Bus mit dem Getriebesteuergerät verbindbar ist. Das elektrische Fahrstufenwählelement ist dabei in einem Schaltblock beispielsweise in einem Lenkrad integriert und umfasst ein Bedienteil und ein Wählelementsteuergerät. Dieses dient der Generierung entsprechender Signale aus der Betätigung des Bedienteiles. Der Ausgang des Wählelementsteuergerätes kommuniziert dabei mit dem Getriebesteuergerät. Bei dieser Ausführung wird dabei das über dem Wählhebel vorgegebene Signal an einer Steuereinrichtung in unmittelbarer räumlicher Nähe verarbeitet. Die Kopplung mit dem Getriebesteuergerät kann via Can-Bus oder einer separaten Leitung erfolgen. Weitere Eingangsgrößen für die Getriebesteuerung werden der Getriebesteuereinrichtung separat zugeführt, wodurch auch mit dieser Lösung die bereits genannten Nachteile hinsichtlich der Kabelführung, des Vorsehens von Abschirmeinrichtungen sowie der damit verbundenen konstruktiven Notwendigkeiten, insbesondere in Form von Durchführungen am Getriebegehäuse auftreten. Auch hier wird aufgrund der hohen Anzahl erforderlicher Leitungen und Steckverbindungen das gesamte System störanfälliger, was zu einer geringeren Verfügbarkeit und Zuverlässigkeit des Gesamtsystems führt.

Der Erfindung liegt daher die Aufgabe zugrunde, eine Vorrichtung zur Steuerung einer Getriebebaueinheit der eingangs genannten Art derart weiterzuentwickeln, daß die genannten Nachteile vermieden werden. Im einzelnen ist auf eine erhebliche Reduzierung der erforderlichen Anzahl der Leitungsverbindungen und damit der möglichen Störstellen gegenüber den bekannten Lösungen abzustellen, unabhängig von der Anordnung der Getriebebaueinheit im Fahrzeug gegenüber der ansonsten vorhandenen Fahrzeugelektronik. Die Steuervorrichtung soll des weiteren kostengünstig bereitstellbar und leicht nachrüst- sowie austauschbar sein.

Die erfindungsgemäße Lösung ist durch die Merkmale des Anspruches 1 charakterisiert. Vorteilhafte Ausgestaltungen sind in den Unteransprüchen wiedergegeben.

Erfindungsgemäß weist die Vorrichtung zur elektrischen Steuerung einer Getriebebaueinheit eine der Getriebebaueinheit zugeordnete elektronische Steuereinrichtung, in der Regel ein Steuergerät für die Getriebebaueinheit und eine Vorwahleinrichtung zur Vorgabe eines Fahrerwunsches für einen bestimmten Fahrzustand auf, wobei der Vorwahleinrichtung eine zweite Steuereinrichtung unmittelbar zugeordnet ist. Zwischen erster elektronischer Steuereinrichtung und zweiter elektronischer Steuereinrichtung ist wenigstens eine elektrische Kopplung vorgesehen. Die zweite elektrische Steuereinrichtung dient dabei der Aufnahme und Verarbeitung mittels der Vorwahleinrichtung generierten elektrischen Signale und der Weiterleitung an die elektronische Steuereinrichtung der Getriebebaueinheit. Zur Weitergabe der einzelnen Signale genügt dabei ein serielles Übertragungsmittel, beispielsweise in Form eines Can-Busses oder eines Lichtwellenleiters.

Unter Steuervorrichtung wird dabei im allgemeinen die Gesamtheit aus Steuereinrichtung, Stellgliedern und Erfassungseinrichtungen sowie der Verbindungsleitungen zu diesen verstanden, während Steuereinrichtung in der Regel die bauliche Komponente Steuergerät beinhaltet.

Die erfindungsgemäße Lösung ermöglicht es, die Anzahl der erforderlichen elektrischen Verbindungen in Form von Leitungssträngen im Fahrzeug auf ein Minimum zu reduzieren, was insbesondere dann von besonderem Vorteil ist, wenn die Getriebebaueinheit und damit die Steuereinrichtung der Getriebebaueinheit räumlich sehr weit entfernt von der Vorwahleinrichtung angeordnet sind. Die erste elektronische Steuereinrichtung, welche der Getriebebaueinheit unmittelbar zugeordnet ist, kann dabei
a) in unmittelbarer räumlicher Nähe zur Getriebebaueinheit oder
b) am Getriebegehäuse oder
c) im Getriebegehäuse integriert
angeordnet sein. Die erforderlichen elektrischen Verbindungen und damit die Länge der Leitungsstränge werden dabei durch den räumlichen Abstand zwischen der zweiten elektronischen Steuereinrichtung und der ersten elektronischen Steuereinrichtung bestimmt. Durch die Reduzierung der Anzahl der Leitungsstränge werden die möglichen Störstellen reduziert, was sich in einer Erhöhung der Zuverlässigkeit und der Verfügbarkeit des Gesamtsystems "Getriebesteuerung" niederschlägt.

Für die Zuordnung der zweiten elektronischen Steuereinrichtung zur Vorwahleinrichtung bestehen im wesentlichen die folgenden Möglichkeiten:
a) räumlich nahe Anordnung von Vorwahleinrichtung und zweiter Steuereinrichtung
b) räumlich nahe Anordnung von Vorwahleinrichtung und zweiter Steuereinrichtung unter Bildung einer baulichen Einheit
c) Ausführung der Vorwahleinrichtung als elektronische Steuereinrichtung

Die unter b) und c) genannten Möglichkeiten stellen dabei zwei besonders bevorzugte Ausführungen dar, da diese neben einem Minimum an Bauelementen und erforderlichen Leitungsverbindungen sehr kurze Leitungsverbindungen zwischen Vorwahleinrichtung und Steuereinrichtung bedingen. Die zweite elektronische Steuereinrichtung umfaßt dabei vorzugsweise wenigstens einen Mikroprozessor.

Erfindungsgemäß weist die zweite elektronische Steuereinrichtung wenigstens eine Mehrzahl von Eingängen auf, welche der erforderlichen Anzahl der an der Vorwahleinrichtung generierten Signale entspricht. In einer Weiterentwicklung weist die zweite elektronische Steuereinrichtung weitere zusätzliche Eingänge auf, welche der Verarbeitung weiterer Eingangssignale zur Ansteuerung der Getriebebaueinheit dienen. In diesem Fall übernimmt die zweite Steuereinrichtung gleichzeitig die Schnittstellenfunktionen, welche mit der Steuerung der Getriebebaueinheit primär nichts zu tun haben. Dies bietet den Vorteil, daß die Elektronik der ersten elektronischen Steuereinrichtung für die Getriebebaueinheit erheblich vereinfacht werden kann. Diese Eingänge sind jedoch optional, das heißt nicht zwingend erforderlich. Dabei sind die Eingänge mit den entsprechenden Einrichtungen zur Erfassung der weiteren zur Ansteuerung der Getriebebaueinheit verwendeten Größen gekoppelt. Als optional zu erfassende und/oder auszugebende Größen werden dabei die nachfolgend genannten angesehen:
a) Vorgabe eines Fahrerwunsches zur Betätigung einer Bremseinrichtung
b) Funktionszustand der Bremseinrichtung
c) Größen zur wenigstens mittelbaren Beschreibung der konkreten Einsatzbedingungen

Als weitere zu berücksichtigende Größe (bzw. Größen) kann bzw. können beispielsweise
d) eine oder eine Mehrzahl von Diagnose-Informationen (Display oder Warnlampen) angesehen werden.

Die einzelnen Eingangsgrößen werden dann von der zweiten elektronischen Steuereinrichtung verarbeitet und dabei über den Ausgang der zweiten Steuereinrichtung an die erste Steuereinrichtung weitergegeben, welche die Stellgrößen zur Ansteuerung bzw. Beaufschlagung der Aktuatoren der einzelnen Getriebeelemente bildet. Alternativ besteht auch die Möglichkeit der Bildung einiger der Stellgrößen bereits in der zweiten Steuereinrichtung.

Die erfindungsgemäße Lösung ist für jegliche Anordnung der Getriebebaueinheit und der Getriebelektronik zueinander geeignet. Sie bietet den Vorteil, daß die Getriebeelektronik unabhängig von der Anordnung der Getriebebaueinheit im Fahrzeug gegenüber der Fahrzeugelektronik immer in Getriebenähe, vorzugsweise im Getriebegehäuse integriert, angeordnet sein kann. Dies bedeutet, daß die zwischen erster elektronischer Steuereinrichtung und Getriebe erforderlichen Leitungsstränge sehr kurz gewählt werden können und damit die Gesamtlösung wesentlich kostengünstiger gestaltet werden kann, da die Anzahl der Störstellen erheblich reduziert wird. Werden des weiteren über die zweite elektronische Steuereinrichtung die Mehrzahl der erforderlichen fahrzeugseitigen Signale, welche in der Regel über eine gemeinsame Schnittstelle anderen elektronischen Steuereinrichtungen zuführbar sind, der ersten Steuereinrichtung zur Verfügung gestellt, sind die in der Regel zur Überbrückung eines größeren räumlichen Abstandes erforderlichen Leitungsstränge zwischen der zweiten und der ersten Steuereinrichtung hinsichtlich ihrer Anzahl gering gehalten. Ein weiterer wesentlicher Vorteil besteht darin, daß bei Integration der ersten Getriebesteuereinrichtung in die Getriebebaueinheit nur wenige elektrische Leitungen in die Getriebebaueinheit hineingeführt werden müssen, das heißt, daß der Bauteilaufwand für die zu integrierende Elektronik gering gehalten wird und die Anzahl der erforderlichen Durchführungsstellen ebenfalls minimal ist.

Die Kopplung zwischen der zweiten elektronischen Steuereinrichtung und den einzelnen Erfassungseinrichtungen zur Erfassung der die zur Ansteuerung der Getriebebaueinheit vorgebbaren Sollwerte wenigstens mittelbar beschreibenden Größen und/oder der erforderlichen Ist-Werte zur Beschreibung der Funktionsweise einzelner Elemente des Antriebssystems und/oder der Einsatzbedingungen der Umgebung kann vielgestaltig ausgeführt werden. Dies gilt auch für die Realisierung beziehungsweise Generierung der in der zweiten elektronischen Steuereinrichtung zu verarbeitenden elektrischen Signale.

Für die konstruktive Ausgestaltung der Vorwahleinrichtung bestehen ebenfalls eine Vielzahl von Möglichkeiten. Diese unterscheiden sich im wesentlichen hinsichtlich der Ausführung der Betätigungselemente und der Art der Generierung eines Signales für die zweite elektronische Steuereinrichtung. Dabei können die Betätigungselemente beispielsweise als Tasten, Schalter (Kipp- oder Schiebeschalter) und Hebel ausgeführt sein. Diesen Betätigungselementen sind entweder einzeln oder gemeinsam Erfassungsmittel zur Erfassung der Funktionsstellungen der einzelnen Betätigungselemente und/oder der Betätigung eines Betätigungselementes generell zugeordnet. Vorzugsweise werden jedoch zur einfachen Integration und Kopplung mit der zweiten elektronischen Steuereinrichtung ein oder mehrere Sensoren verwendet, welche wenigstens ein elektrisches Signal für die zweite elektronische Steuereinrichtung zur Verfügung stellen. Die Erfassungsmittel sind dann derart gestaltet, daß eine Betätigung eines beliebigen oder speziellen Betätigungselementes beispielsweise durch eine mechanische Größe, z.B. einen Weg, Winkel oder eine Kraft charakterisierbar ist, welche ein Ansprechen des Sensors bewirkt. In einer Weiterentwicklung besteht auch die Möglichkeit andere, die Betätigung wenigstens mittelbar beschreibende Größen zu verwenden, beispielsweise in Form von Impulsen, optischen oder akustischen Signalen.

Die Auswahl, Zuordnung und Kopplung der einzelnen Erfassungsmittel mit den entsprechenden Betätigungselementen, insbesondere hinsichtlich der Ausgestaltung der konstruktiven Verknüpfung liegt im Tätigkeitsbereich des zuständigen Fachmannes und ist nicht auf eine bestimmte Ausführung begrenzt.

Unter einem weiteren Aspekt der Erfindung ist die erfindungsgemäß gestaltete Vorrichtung zur Steuerung einer Getriebebaueinheit mit einer übergeordneten Fahrsteuerung für das Fahrzeug gekoppelt. Dabei kann die erfindungsgemäße Vorrichtung in die übergeordnete Fahrsteuerung integriert sein. Eine andere Möglichkeit besteht darin, daß die Kopplung mit der übergeordneten Fahrsteuerung über die Verknüpfung einer der beiden elektronischen Steuereinrichtungen mit der übergeordneten Fahrsteuerung erfolgt. Denkbar ist es auch, auf eine generelle Kopplung mit der übergeordneten Fahrsteuerung zu verzichten und lediglich die einzelnen ermittelten Größen an eine von einer Vielzahl von Steuereinrichtungen gemeinsam genutzten Kommunikationsschnittstelle in Form eines Can-Busses zu liefern. In diesem Fall besteht die Möglichkeit, daß bestimmte Größen nicht mehr generell direkt den einzelnen Steuereinrichtungen an deren Eingängen zur Verfügung gestellt werden müssen, sondern diese aus einem übergeordneten Can-Bus ausgelesen werden, welcher die aktuellen Daten entweder direkt von den Erfassungsmitteln oder anderen Steuereinrichtungen erhält.

Die erfindungsgemäße Lösung ist für jegliche Art von automatischen Getriebebaueinheiten unabhängig von der Art der Realisierung der Drehzahl/Drehmomentenwandlung einsetzbar. Diese kann hydrodynamisch, mechanisch, hydrostatisch oder elektrisch erfolgen. Entscheidend ist lediglich, daß zusätzlich zur eigentlichen Getriebesteuereinrichtung eine weitere zweite Steuereinrichtung vorgesehen ist, welche die Signale der die fahrzeugseitigen Randbedingungen und/oder des Fahrerwunsches wenigstens mittelbar beschreibenden Größen verarbeitet und der Getriebesteuereinrichtung die verarbeiteten und/oder daraus ermittelten Größen zur Verfügung stellt.

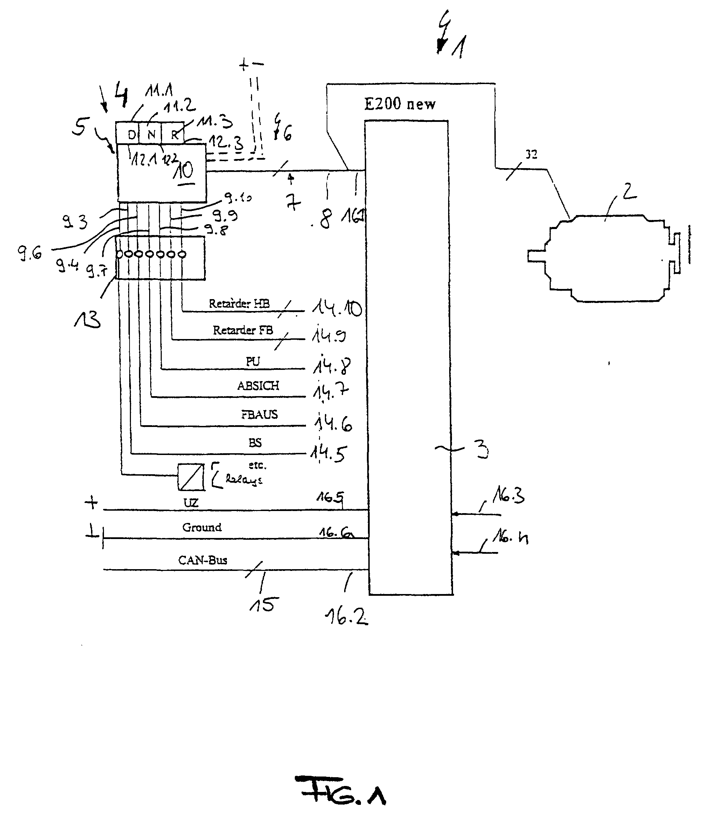

Die erfindungsgemäße Lösung wird nachfolgend anhand einer Figur dargestellt. Diese Figur 1 verdeutlicht in schematisch vereinfachter Darstellung den Grundaufbau und die Funktionsweise einer erfindungsgemäß gestalteten Vorrichtung 1 zur elektronischen Steuerung einer Getriebebaueinheit 2, umfassend eine elektronische Steuereinrichtung 3 für die Getriebebaueinheit 2 und eine Vorwahleinrichtung 4 zur Vorgabe eines Fahrerwunsches für einen bestimmten Fahrzustand zur Ansteuerung der Getriebebaueinheit 2 durch Ansteuerung insbesondere der Schaltelemente und/oder der hydrodynamischen Leistungsübertragungs- oder Wandlungseinrichtungen der Getriebebaueinheit 2. Im einzelnen werden dabei wenigstens die drei Fahrzustände "Leerlauf", "Rückwärtsfahrt" und "Vorwärtsfahrt" unterschieden, wobei im Fahrzustand "Vorwärtsfahrt" und/oder "Rückwärtsfahrt" unter Ausnutzung einer bestimmten Anzahl von theoretisch möglichen Gangstufen der Getriebebaueinheit ein bestimmter vordefinierbarer Übersetzungsbereich aus einem theoretisch möglichen Gesamtübersetzungsbereich überstrichen werden kann. Erfindungsgemäß bildet die Vorwahleinrichtung 4 eine zweite Steuereinrichtung 5 der Vorrichtung 1 zur Steuerung einer Getriebebaueinheit 2. Die Vorwahleinrichtung 4 und die zweite Steuereinrichtung 5 sind funktional zusammengefaßt und bilden eine ECU. Dies bedeutet, daß diese wenigstens einen Mikroprozessor umfaßt. Diese zweite Steuereinrichtung 5 übernimmt eine sogenannte Sammel- und Verteilfunktion. Die in einem konventionellen System einer Getriebesteuerung von dieser selbst verarbeiteten Eingangssignale und erzeugten Ausgangssignale werden nunmehr erfindungsgemäß zumindest zum Teil über die zweite Steuereinrichtung eingelesen beziehungsweise ausgegeben. Die Übertragung zur eigentlichen Getriebesteuerung, das heißt der Steuereinrichtung der Getriebebaueinheit 2 erfolgt über eine elektrische Kopplung 6, welche vorzugsweise wenigstens ein serielles Übertragungsmittel 7 umfaßt. Dieses kann beispielsweise in Form eines sogenannten Can-Busses 8 ausgeführt werden, welcher wenigstens eine Leitung zur Kopplung der einzelnen elektronischen Steuereinrichtungen 3 und 5 umfaßt. Diese Leitung 8 dient dabei in erster Linie der Kommunikation der einzelnen Steuereinrichtungen, erster Steuereinrichtung 3 und zweiter Steuereinrichtung 5 untereinander. Optional kann dabei der Fahrzeug-CAN-Bus Verwendung finden. Dabei nimmt die zweite Steuereinrichtung über ihre Eingänge 9.1 bis 9.n verschiedene Eingangsgrößen auf und wandelt diese in eine für die erste Steuereinrichtung 3 lesbare Form um und sendet diese Nachricht auf den Can-Bus, beziehungsweise der Leitung 8. Es können auch weitere hier nicht dargestellte Ausgänge vorgesehen werden, über die die zweite Steuereinrichtung 5 mit anderen Systemen in Interaktion treten kann. Dabei werden Eingangsgrößen erfaßt, in eine, für die erste Steuereinrichtung lesbare Form umgewandelt, und als Nachricht über das serielle Übertragungsmittel 7 (vorzugsweise als CAN-Bus ausgeführt) gesendet. Umgekehrt werden über das serielle Übertragungsmittel Stellgrößen von der ersten Steuereinrichtung an die zweite Steuereinrichtung übertragen, dort decodiert und die entsprechenden Ausgänge angesteuert. Zur Realisierung einer Notfahrfunktion bei Ausfall des CAN-Busses und/oder zur Plausibiliätsprüfung besteht die Möglichkeit des Einsatzes eines zusätzlichen Übertragungsmittels, welches z. B. in Form eines pulsweitenmodulationscodierten Signals den vom Fahrer gewünschten Fahrzustand - Vorwärts, Rückwärts oder Neutral - an die Steuereinrichtung überträgt und somit wenigstens die zum Betrieb erforderlichen Minimalfunktionen aufrechterhält. Da in einer bevorzugten Ausführung die Vorwahleinrichtung 4 direkt als zweite Steuereinrichtung 5 ausgeführt ist, umfaßt die zweite elektronische Steuereinrichtung 5 wenigstens einen Mikroprozessor 10, dem wenigstens die, die Betätigung der einzelnen Betätigungselemente 11.1 bis 11.n der Vorwahleinrichtung 4 wenigstens mittelbar beschreibenden Größen zur Verarbeitung zugeführt werden. Zwischen den Betätigungselementen 11.1 bis 11.n und dem Mikroprozessor 10 bestehen somit wenigstens die elektrischen Kopplungen 12.1 bis 12.n. Im vorgenannten Fall handelt es sich bei der Vorwahleinrichtung 4 beispielsweise um eine Tastschaltereinrichtung mit wenigstens drei vorgebbaren Fahrzuständen, "Leerlauf", "Rückwärtsfahrt" und "Vorwärtsfahrt", wobei im Fahrzustand "Vorwärtsfahrt" der Gesamtbereich des theoretisch möglichen Übersetzungsbereiches der Getriebebaueinheit 2 ausgenutzt wird. Für jedes Betätigungselement, hier 11.1 bis 11.3 der Tastschaltereinrichtung besteht somit eine elektrische Kopplung 12.1 bis 12.3 mit dem Mikroprozessor. Diese bilden gleichzeitig die Eingänge 9.1 bis 9.3. Zusätzlich sind der zweiten elektronischen Steuereinrichtung 5 fahrzeugseitig weitere Signale zur Verarbeitung zuführbar. Diese werden über die Eingänge 9.4 bis 9.10 der zweiten elektronischen Steuereinrichtung 5 zugeführt. Dabei laufen in einer Einrichtung 13, welche als Elektronikfach bezeichnet wird, die elektrischen Verbindungen zu anderen Komponenten des Fahrzeuges zusammen. Diese Verbindungen sind jedoch nicht zwingend erforderlich. Vorzugsweise werden dabei Signale verbunden, welche den Funktionszustand einzelner Antriebskomponenten beziehungsweise die Umgebungsbedingungen einzelner Komponenten im Antriebsstrang wenigstens mittelbar beschreiben. Diese werden dabei von entsprechenden Erfassungselementen geliefert. Die Eingänge 9.4 bis 9.10 sind dazu mittels entsprechenden Erfassungsmitteln 14.4 bis 14.n wenigstens mittelbar gekoppelt. Die Erfassungsmittel dienen dabei beispielsweise der Erfassung wenigstens einer, den Funktionszustand (beispielsweise Fahrbetrieb, Bremsbetrieb) und/oder die Betriebsweise eines hydrodynamischen Retarders wenigstens mittelbar beschreibenden Größe, den Funktionszustand einer Feststellbremseinrichtung wenigstens mittelbar beschreibenden Größe und/oder einer, die Funktionsweise und/oder den Betriebszustand einer Antriebskomponente wenigstens mittelbar beschreibenden Größe. Die für die Ansteuerung der Getriebebaueinheit direkt erforderlichen Größen werden dabei bereits über die zweite Steuereinrichtung 5 verarbeitet und in entsprechender Weise der ersten Getriebesteuereinrichtung zugeführt. Dabei bilden die über die zweite Steuereinrichtung erfaßbaren und verarbeiteten Größen die Größen, welche wenigstens zur Ansteuerung der Getriebebaueinheit 2, insbesondere der einzelnen Schaltelemente erforderlich sind. Zusätzliche Größen, welche beispielsweise der Realisierung eines entsprechenden Motor-Getriebemanagementes in einem Antriebsstrang für ein Fahrzeug dienen, können der ersten Getriebesteuereinrichtung 3 nach wie vor direkt zugeführt werden, beispielsweise über einen Can-Bus 15. Dieser ist dabei mit einem weiteren Eingang 16.2 der ersten Getriebesteuereinrichtung verbunden. Der erste Eingang der Getriebesteuereinrichtung 3 wird dabei von der elektrischen Kopplung 6 mit der zweiten Getriebesteuereinrichtung 5 gebildet. Die Getriebesteuereinrichtung 3 kann des weiteren zusätzliche Eingänge und Ausgänge 16.3 bis 16.n aufweisen, welche der Verarbeitung weiterer Größen dienen.

Die erste Steuereinrichtung 3 kann dabei in unmittelbarer räumlicher Nähe zur Getriebebaueinheit 2 angeordnet sein. Vorzugsweise erfolgt jedoch die Anordnung im Getriebegehäuse 2. In diesem Fall ist lediglich die Realisierung der Durchführung und Versorgung der elektrischen Kopplung 6, insbesondere einer Leitung oder des Leitungspaares 8 durch ein Gehäuse der Getriebebaueinheit 2 und eine Durchführung der weiteren Leitungen zur Realisierung einer elektrischen Verbindung zwischen den Eingängen 16.2 bis 16.n und den entsprechenden Erfassungsmitteln zur Erfassung der zu verarbeitenden Größen und dem Can-Bus sowie der Spannungsversorgung 16.5 und 16.6 erforderlich. Bei Anordnung der ersten Steuereinrichtung 3 in räumlicher Nähe zur Getriebebaueinheit 2 sind lediglich die einzelnen elektrischen Verbindungen zwischen der ersten elektronischen Steuereinrichtung 3 und der Aktuatoren zur Betätigung der einzelnen Schaltelemente zur Realisierung einer Änderung des Fahrzustandes sowie der Steuereinrichtung 3 und den Getriebesensoren in der Getriebebaueinheit 2 erforderlich.

Die erfindungsgemäße Gestaltung einer Vorrichtung zur Steuerung einer Getriebebaueinheit ist nicht auf eine konkrete konstruktive Ausführung beschränkt. Erfindungswesentlich ist lediglich, daß neben der eigentlichen elektronischen Steuereinrichtung zur Ansteuerung der einzelnen Getriebelemente der Getriebebaueinheit eine weitere zweite Steuereinrichtung vorgesehen ist, welche die ansonsten zur Ansteuerung der Getriebebaueinheit zwingend erforderlichen Größen aufnimmt und verarbeitet und das Ergebnis der ersten elektronischen Steuereinrichtung über ein Minimum an Leitungssträngen, vorzugsweise lediglich eine Leitung, beispielsweise auch ein Leitungspaar, zuführt. Vorzugsweise wird dabei die Vorwahleinrichtung zur Vorgabe eines bestimmten Fahrerwunsches zur Änderung des Fahrzustandes als zweite Steuereinrichtung ausgebildet. Dies bietet den Vorteil der räumlichen Zuordnung der fahrzeugseitigen Elektronik und der Vorwahleinrichtung zueinander, unabhängig von der Anordnung der Getriebebaueinheit im Fahrzeug.

### Bezugszeichenliste

- 1: Vorrichtung zur Steuerung einer Getriebebaueinheit
- 2: Getriebebaueinheit
- 3: Erste Steuereinrichtung zur Ansteuerung der Getriebebaueinheit
- 4: Vorwahleinrichtung zur Vorgabe eines Fahrerwunsches zur Änderung eines Fahrzustandes
- 5: Zweite Steuereinrichtung
- 6: Elektrische Kopplung
- 7: Serielle Übertragungsmittel
- 8: Leitung, Leitungspaar
- 9.1-9.n: Eingänge
- 10: Mikroprozessor
- 11.1-11.n: Betätigungselemente
- 12.1-12.n: Elektrische Kopplung zwischen den Betätigungselementen und dem Mikroprozessor
- 13: Elektronikfach
- 14.1-14.n: Erfassungsmittel
- 15: Can-Bus
- 16.1-16.n: Eingänge und Ausgänge der ersten Steuereinrichtung

## Patentansprüche

1. Vorrichtung zur elektrischen Steuerung einer Getriebebaueinheit (2)
mit einer ersten elektronischen Steuereinrichtung (3) für die Ansteuerung der Getriebeelemente der Getriebebaueinheit (2)
mit einer Vorwahleinrichtung (4) zur Vorgabe eines Fahrerwunsches für einen der nachfolgend genannten Fahrzustände zur Ansteuerung der Getriebebaueinheit: (2)
- "Leerlauf"
- "Rückwärtsfahrt"
- "Vorwärtsfahrt"
mit einer zweiten Steuereinrichtung (5), welche der Vorwahleinrichtung (4) unmittelbar zugeordnet ist und wenigstens die mittels der Vorwahleinrichtung vorgegebenen Größen zur Ansteuerung der Getriebebaueinheit (2) verarbeitet;
die zweite Steuereinrichtung (5) weist wenigstens einen Ausgang auf, welcher mit einem Eingang (16.1) zu der ersten Steuereinrichtung (3) elektrisch gekoppelt ist;
die Vorwahleinrichtung (4) und die zweite elektronische Steuereinrichtung (5) bilden eine bauliche Einheit; **dadurch gekennzeichnet, daß**
der zweiten elektronischen Steuereinrichtung (5) fahrzeugseitig weitere Signale zur Verarbeitung zuführbar sind, welche den Funktionszustand einzelner Antriebskomponenten beziehungsweise die Umgebungsbedingungen einzelner Komponenten im Antriebsstrang wenigstens mittelbar beschreiben.

2. Getriebebaueinheit nach Anspruch 1, **dadurch gekennzeichnet, daß** die zweite Steuereinrichtung (5) von der Vorwahleinrichtung (4) gebildet wird.

3. Vorrichtung nach einem der Ansprüche 1 oder 2, **dadurch gekennzeichnet, daß** die elektrische Kopplung zwischen dem Ausgang der zweiten elektrischen Steuereinrichtung (5) und dem ersten Eingang (16.1) der ersten elektrischen Steuereinrichtung (3) wenigstens ein serielles Übertragungsmittel umfaßt.

4. Vorrichtung nach Anspruch 3, **dadurch gekennzeichnet, daß** das serielle Übertragungsmittel weinigstens eine Leitung oder ein Leitungspaar (8) in Form eines Can-Buses umfaßt.

5. Vorrichtung nach Anspruch 3, **dadurch gekennzeichnet, daß** die elektrische Kopplung wenigstens einen Lichtwellenleiter umfaßt

6. Vorrichtung nach einem der Ansprüche 1 bis 5, **dadurch gekennzeichnet, daß** die erste Steuereinrichtung in der Getriebebaueinheit(2) integriert ist

7. Vorrichtung nach einem der Ansprüche 1 bis 5, **dadurch gekennzeichnet, daß** die erste Steuereinrichtung (3) in unmittelbarer räumlicher Nähe der Getriebebaueinheit (2) angeordnet ist.

8. Vorrichtung nach einem der Ansprüche 1 bis 7, **dadurch gekennzeichnet, daß** die zweite Steuereinrichtung eine Vielzahl von weiteren Eingängen (9.4 bis 9.n) aufweist, welche mit Erfassungsmitteln zur wenigstens mittelbaren Erfassung der Betriebsweise und/oder des Funktionszustandes von Antriebskomponenten des Antriebsstranges und/oder Erfassungsmitteln zur Erfassung der Umgebungsbedingungen und oder Erfassungsmittel zur Erfassung des Fahrerwunsches der Antriebskomponenten gekoppelt sind.

9. Vorrichtung nach einem der Ansprüche 1 bis 8, **dadurch gekennzeichnet, daß** die Vorwahleinrichtung weitere Mittel zur Vorgabe wenigstens eines der nachfolgend genannten Fahrzustände zur Ansteuerung der Getriebebaueinheit (2) umfaßt:
- "Vorwärtsfahrt" unter Ausnutzung wenigstens eines Teilbereiches des mittels der theoretisch möglichen Gangstufung überstreichbaren Gesamtbetriebsbereiches der Getriebebaueinheit und/oder
- "Sperrung der theoretisch möglichen Gangstufen".

10. Vorrichtung nach Anspruch 8 **dadurch gekennzeichnet, daß** an einem Ausgang der zweiten Steuereinrichtung wenigstens ein Signal zur Ansteuerung der Gebtriebebaueinheit zur Realisierung eines Notfahrbetriebes und/oder Plausibilitätsprüfung erzeugbar ist.

## Claims

1. An apparatus for the electronic control of a transmission module (2), with a first electronic control device (3) for triggering the transmission elements of the transmission module (2), with a preselector device (4) for predetermining a driver's wish concerning of the following subsequently stated driving states for triggering the transmission module (2):
- idling;
- reversing;
- forward motion;
with a second control device (5) which is directly associated with the preselector device (4) and processes at least the variables predetermined by means of the preselector device for triggering the transmission module (2);
with the second control device (5) having at least one output which is electrically coupled with an input (16.1) to the first control device (3);
with the preselector device (4) and the second control device (5) forming a modular unit, **characterized in that** on the vehicle side further signals can be supplied to the second electronic control unit (5) for processing, which signals describe at least indirectly the functional state of individual drive components or the ambient conditions of individual components in the drive train.

2. A transmission module as claimed in claim 1, **characterized in that** the second control device (5) is formed by the preselector device (4).

3. An apparatus as claimed in one of the claims 1 or 2, **characterized in that** the electric coupling between the output of the second electric control device (5) and the first input (16.1) of the first electric control device (3) comprises at least one serial transmission means.

4. An apparatus as claimed in claim 3, **characterized in that** the serial transmission means comprises at least one lead or pair of leads (8) in the form of a CAN bus.

5. An apparatus as claimed in claim 3, **characterized in that** the electric coupling comprises at least one optical waveguide.

6. An apparatus as claimed in one of the claims 1 to 5, **characterized in that** the first control device is integrated in the transmission module (2).

7. An apparatus as claimed in one of the claims 1 to 5, **characterized in that** the first control device (3) is arranged directly adjacent to the transmission module (2).

8. An apparatus as claimed in one of the claims 1 to 7, **characterized in that** the second control device comprises a plurality of further inputs (9.4 through 9.n) which are coupled with detection means for detecting at least indirectly the operating mode and/or the functional state of the drive components of the drive train and/or detection means for detecting the ambient conditions and/or detection means for detecting the driver's wish concerning the drive components.

9. An apparatus as claimed in one of the claims 1 to 8, **characterized in that** the preselector device comprises further means for predetermining at least one of the following driving states for triggering the transmission module (2):
- "forward motion" by using at least a partial range of the overall operating range of the transmission module which can be covered by means of the theoretically possible speed stages and/or
- "blockage of the theoretically possible speed stages".

10. An apparatus as claimed in claim 8, **characterized in that** at least one signal is producible in an output of the second control device for triggering the transmission module for the purpose of realizing an emergency drive operation and/or plausibility check.

## Revendications

1. Dispositif pour la commande électrique d'une unité de boîte de vitesses (2) avec un premier dispositif de commande électronique (3) pour l'actionnement des éléments d'engrenages de l'unité de boîte de vitesses (2),
avec un dispositif de présélection (4) pour l'indication d'une demande du conducteur concernant l'un des états de marche suivants pour la commande de l'unité de boîte de vitesses (2) :
- « point mort »
- « marche arrière »
- « marche avant »
avec une deuxième dispositif de commande (5) directement associée au dispositif sélection (4) qui traite au moins les grandeurs indiquées par le dispositif de présélection pour commander l'unité de boîte de vitesses (2), le deuxième dispositif de commande (5) possédant au moins une sortie reliée électriquement avec une entrée (16.1) du premier dispositif de commande (3) ;
le dispositif de présélection (4) et le deuxième dispositif de commande électronique (5) formant une unité constructive ;
**caractérisé en ce que** la deuxième unité de commande électronique (5) peut recevoir du côté du véhicule d'autres signaux à traiter qui décrivent au moins indirectement l'état de fonctionnement des divers composants de traction ou les conditions d'environnement de certains éléments de la transmission.

2. Unité de boîte de vitesses selon la revendication 1, **caractérisée en ce que** le deuxième dispositif de commande (5) est formé par le dispositif de présélection (4).

3. Dispositif selon l'une quelconque des revendications 1 ou 2, **caractérisé en ce que** le couplage électrique entre la sortie du deuxième dispositif de commande électrique (5) et la première entrée (16.1) du premier dispositif de commande électrique (3) comprend au moins un moyen de transmission en série.

4. Dispositif selon la revendication 3, **caractérisé en ce que** le moyen de transmission en série comprend au moins une ligne ou une paire de lignes (4) formant un bus CAN.

5. Dispositif selon la revendication 3, **caractérisé en ce que** le couplage électrique comprend au moins un guide d'ondes lumineuses.

6. Dispositif selon l'une quelconque des revendications 1 à 5, **caractérisé en ce que** la première unité de commande est intégrée dans l'unité de boîte de vitesses (2).

7. Dispositif selon l'une quelconque des revendications 1 à 5, **caractérisé en ce que** le premier dispositif de commande (3) est disposé à proximité immédiate de l'unité de boîte de vitesses (2).

8. Dispositif selon l'une quelconque des revendications 1 à 7, **caractérisé en ce que** le deuxième dispositif de commande comprend une pluralité d'autres entrées (9.4 à 9.n), couplées avec des moyens de détection pour la détection au moins indirecte du mode de fonctionnement et/ou de l'état de fonctionnement de composants de la transmission et/ou des moyens de détection pour la détection des conditions d'environnement et/ou de moyenne détection pour la détection des demandes du conducteur concernant les composants de la transmission.

9. Dispositif selon l'une quelconque des revendications 1 à 8, **caractérisé en ce que** le dispositif de présélection comprend d'autres moyens pour prédéterminer au moins un des états de conduite suivants pour la commande de l'unité de boîte de vitesses (2) :
- « marche avant » en utilisant au moins une partie de la plage totale pouvant être couverte au moyen de la plage de rapports théoriquement possible de l'unité de boîte de vitesses, et/ou
- « blocage des rapports théoriquement possibles ».

10. Dispositif selon la revendication 8, **caractérisé en ce qu'**au moins un signal de commande de l'unité de boîte de vitesses peut être généré à une sortie du deuxième dispositif de commande pour réaliser un mode de conduite de secours et/ou un contrôle de plausibilité.
